# EUROPÄISCHE PATENTSCHRIFT

(11) **EP 1 225 000 B1**
(45) Veröffentlichungstag und Bekanntmachung des Hinweises auf die Patenterteilung: **29.09.2004**
(21) Anmeldenummer: 01129482.4
(22) Anmeldetag: 11.12.2001
(51) Int. Cl.: B23K 33/00, F16B 17/00

(54) **Positionsgenaue Lappverbindung zwischen Blechteilen**
Exact positioning staked joint between sheet metal
Raccord par encochage entre tôles à positionnement exact

(30) Priorität: 23.01.2001 DE 10104395
(43) Veröffentlichungstag der Anmeldung: 24.07.2002
(73) Patentinhaber: Bayerische Motoren Werke Aktiengesellschaft, 80809 München (DE)
(72) Erfinder: Lingl, Günther, 85051 Ingolstadt (DE)

(56) Entgegenhaltungen:
- WO-A-00/04295
- DE-A- 4 023 393
- RICHTER ET AL: "Bauelemente der Feinmechanik" 1959 , VEB VERLAG TECHNIK , BERLIN XP002198593 * Seite 151 - Seite 156 *

## Beschreibung

Die Erfindung bezieht sich auf eine Lappverbindung zwischen mindestens zwei Blechteilen und insbesondere zwei Rohkarosserieteilen vor dem Verschweißen, nach dem Oberbegriff des Patentanspruchs 1.

Lappverbindungen, wie sie zur vorübergehenden gegenseitigen Fixierung von noch unverschweißten Rohkarosserieteilen während des Transports bis zum Einlegen in die Punktschweißstation Verwendung finden, bestehen üblicherweise aus einer vom einen Blechteil hochgebogenen Fügelasche, die durch einen entsprechenden Aufnahmeschlitz im anderen Blechteil eingeschoben und über diesem dann unter Beibehalt der Biegerichtung umgelappt wird. Bei beengten Einbauverhältnissen, z.B. an abgewinkelten Blechteilen mit einer schmalen gegenseitigen Anlagefläche, wo sich die Fügelasche aus Platzgründen nicht über dem anderen Blechteil umbiegen lässt, sind derartige Lappverbindungen jedoch nicht anwendbar.

Verschränkte Lappverbindungen der eingangs genannten Art hingegen, wie sie z.B. aus O. Richter, Bauelemente der Feinmechanik, VEB-Verlag Berlin, 8. Auflage, S. 151-153, bekannt sind, benötigen zwar einen wesentlich geringeren Einbauraum, haben aber den Nachteil, dass im verschränkten Zustand der seitlich auskragenden Lappenteile zwischen dem Aufnahmeschlitz und der Fügelasche ein dem Überstand der Lappenteile entsprechendes Spiel vorhanden ist, so dass eine exakte gegenseitige Fixierung der Blechteile nicht gewährleistet ist.

Eine verschränkte Lappverbindung der eingangs genannten Art ist aus der WO 00/04295 bekannt. Die dort beschriebene Lappverbindung dient dazu, eine feste Verbindung zweier Blechteile zu erzielen, da sie als Alternative zu Schraub-, Niet- oder Schweißverbindungen dient.

Wird eine derartige Blechverbindung nach der WO 00/04295 anschließend verschweißt, so können bei dynamischer Belastung störende Reibgeräusche zwischen den seitlichen Lappenteilen und Blechbereichen, die den Aufnahmeschlitz umgeben, auftreten.

Aufgabe der vorliegenden Erfindung ist es, eine Lappverbindung der eingangs genannten Art dahingehend weiterzubilden, dass auch bei beengten Einbauverhältnissen eine positionsgenaue, gegenseitige Fixierung der Blechteile möglich ist, ohne dass zusätzliche Geräusche bei späterer dynamischer Belastung auftreten.

Diese Aufgabe wird erfindungsgemäß durch die Merkmale des ersten Anspruchs gelöst.

Dadurch, dass die lichte Höhe des jeweiligen Lappenteils über den mit der Flügellasche versehenen Blechteil größer als die Wanddicke des anderen Blechteils bemessen ist, wird nach dem Verschweißen der Blechteile ein Spalt zwischen dem Lappenteil und dem anderen Blechteil vorhanden bleiben, so dass störende Reibgeräusche, die sonst an dieser Stelle unter dynamischer Belastung der Blechteile entstehen könnten, wirksam vermieden werden. Damit ergibt sich eine in der Blechebene spielfreie und exakte gegenseitige Blechteilfixierung, die sich selbst an schmalen Einbauflächen problemlos und mit geringem Montageaufwand, nämlich durch einfaches Abbiegen der vorgeformten Lappenteile, fertig stellen lässt.

Durch die Weiterbildung nach Anspruch 2 wird eine besonders hochwertige Blechteilsicherung vorzugsweise dadurch erzielt, dass die Flügellasche T-förmig ausgebildet und an den beiden seitlichen Lappenteilen verschränkt ist. Dadurch, dass auch hier wieder darauf geachtet wird, dass der Abstand des Lappenteils zum einen Blechteil größer ist als die Wandstärke des anderen Blechteils, werden auch hier störende Reibgeräusche sicher vermieden.

Durch die Weiterbildung nach Anspruch 3 wird eine lagegenaue Fixierung der erfindungsgemäßem Lappverbindung dadurch erreicht, dass außerhalb der Lappverbindung eine Formschlussverbindung, die beispielsweise aus zwei korrespondierenden V- oder U-förmigen Sicken besteht, hergestellt wird. Hierdurch wird verhindert, dass sich die verbundenen Bleche in Längsrichtung des Aufnahmeschlitzes der Lappverbindung verschieben können.

Die Ausgestaltung der Erfindung nach Anspruch 4 beschreibt eine fertigungstechnische Vereinfachung der Formschlussverbindung.

Die Erfindung wird nunmehr anhand eines in den Zeichnungen schematisch dargestellten Ausführungsbeispiels näher erläutert. Es zeigen:
- **Fig. 1**: eine perspektivische Teildarstellung zweier mit einer Lapp- und einer zugehörigen Formschlussverbindung versehener Blechteile vor dem Zusammenfügen; und
- **Fig. 2**: die Aufsicht der Blechteile nach dem Zusammenfügen.

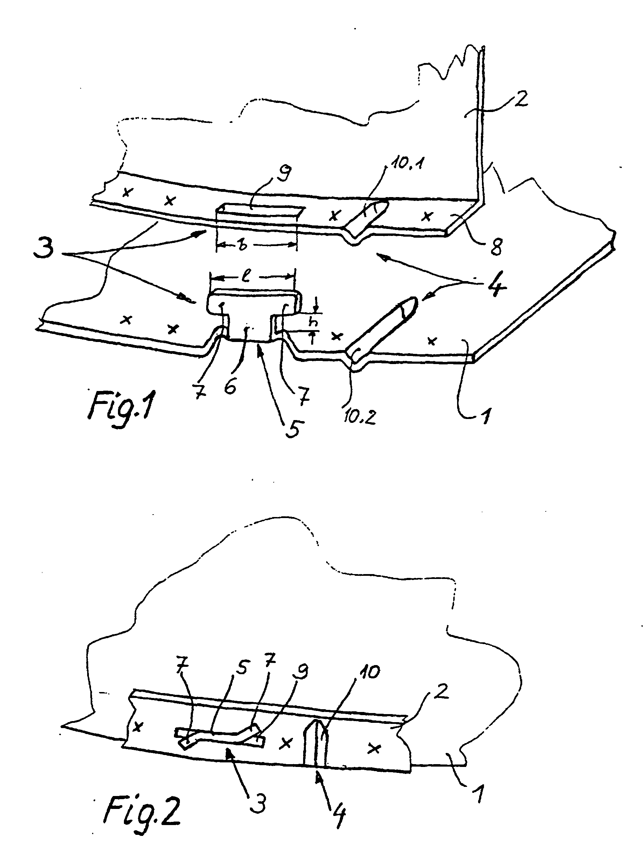

In Fig. 1 sind zwei getrennt vorgeformte Blechteile 1, 2, etwa zwei Rohkarosserieteile, dargestellt, die in einer Schweißstation an den kreuzmarkierten Stellen punktverschweißt werden und bis dahin gegenseitig positionsgenau fixiert werden müssen. Zu diesem Zweck werden die Blechteile 1, 2 durch eine kombinierte Lapp- und Formschlussverbindung 3, 4 zusammengefügt.

Wie Fig. 1 am deutlichsten zeigt, enthält die Lappverbindung 3 eine vom unteren Blechteil 1 hochgebogene, T-förmige Fügelasche 5 mit einem Verbindungssteg 6 und beidseitig von diesem abstehenden Lappenteilen 7, sowie einen im abgewinkelten Randabschnitt 8 des oberen Blechteils 2 ausgebildeten Aufnahmeschlitz 9, dessen Schlitzlänge I der Breite b der Fügelasche 5 an den Lappenteilen 7 und dessen Schlitzbreite der Blechstärke des unteren Blechteils 1 entspricht.

Die Formschlussverbindung 4 besteht bei dem gezeigten Ausführungsbeispiel aus zwei korrespondierenden, V- oder U-förmigen Sicken 10.1 und 10.2 im unteren bzw. oberen Blechteil 1, 2, die jeweils angrenzend an die Lappverbindung 3 quer zur Längenerstreckung der Fügelasche 5 bzw. des Aufnahmeschlitzes 9 verlaufen.

Zum Zusammenfügen der Blechteile 1, 2 wird die Fügelasche 5 in den Aufnahmeschlitz 9 eingeschoben und an den Lappenteilen 7 gegensinnig verschränkt (Fig. 2). Hierdurch werden die Sicken 10.1, 10.2 in gegenseitigen Eingriff gebracht und sichern dadurch die Blechteile 1, 2 gegen das seitliche Bewegungsspiel, welches an der Lappverbindung 3 in Schlitzlängsrichtung entsprechend dem seitlichen Überstand der Lappenteile 7 zwischen dem Verbindungssteg 6 und den Schlitzenden vorhanden ist. Die so zusammengefügten Blechteile 1, 2 werden anschließend zur Schweißstation transportiert und dort punktverschweißt. Um zu verhindern, dass an den verschweißten Blechteilen 1, 2 unter dynamischen Belastungen Reibgeräusche zwischen den verschränkten Lappenteilen 7 und dem oberen Blechteil 2 entstehen, ist die Steghöhe h des Verbindungsstegs 6 geringfügig größer als die Wandstärke des oberen Blechteils 2 bemessen, so dass die Lappenteile 7 nach Herstellung der Punktschweißverbindung vom oberen Blechteil 2 abgehoben sind. Der daraus bis zum Verschweißen der Blechteile 1, 2 resultierende Bewegungsspalt senkrecht zur Blechebene bleibt bei ausreichender Eingriffstiefe der Formschlussverbindung 4 ohne Einfluss auf die, jedenfalls aber innerhalb des zulässigen Toleranzbereichs der Fügegenauigkeit der Blechteile 1, 2.

## Patentansprüche

1. Lappverbindung (3) zwischen zwei Blechteilen (1, 2), insbesondere Rohkarosserieteilen vor dem Verschweißen, bestehend aus zumindest einer von dem ersten Blechteil (1) abstehenden, in einem Aufnahmeschlitz (9) des zweiten Blechteils (2) einführbaren und anschließend mit mindestens einem seitlichen Lappenteil (7) über dem zweiten Bauteil (2) verschränkten Fügelasche (7) sowie aus beim Zusammenfügen der Blechteile (1, 2) wirksamen und diese in Längsrichtung des Aufnahmeschlitzes (9) gegenseitig verschiebefest arretierenden Formschlussverbindung (10),
**dadurch gekennzeichnet, dass** der Abstand (h) des Lappenteils (7) zum ersten Blechteil (1) größer als die Wandstärke des zweiten Blechteils (2) bemessen ist, so dass nach dem Verschweißen ein Abstand des Lappenteils (7) zum zweiten Blechteil (2) verbleibt.

2. Lappverbindung nach Anspruch 1,
**dadurch gekennzeichnet, dass** die Fügelasche (5) T-förmig ausgebildet und im verschränkten Zustand an beiden seitlichen Lappenteilen (7) einen Abstand (h) zu dem einen Blechteil (1) aufweist, welcher größer als die Wandstärke des anderen Blechteils (2) ist.

3. Lappverbindung nach Anspruch 1 oder 2,
**dadurch gekennzeichnet, dass** die Formschlussverbindung (10) seitlich neben der Lappverbindung angeordnet ist.

4. Lappverbindung nach einem der vorangegangenen Ansprüche,
**dadurch gekennzeichnet, dass** die Formschlussverbindung (10) aus quer zur Schlitzlängsrichtung vertaufenden, beim Zusammenfügen der Blechteile (1, 2) formschlüssig ineinandergreifende Sicken (10.1, 10.2) besteht.

## Claims

1. A lap joint (3) between two sheet-metal parts (1, 2), especially roughmachined body parts before welding, comprising at least one joint flap (7) projecting from the first part (1), insertable into a receiving slot (9) in the second part (2), and then interlaced with at least one side lap part (7) over the second part (2), and a positive connection (10) with is operative when the parts (1, 2) are fitted together and secures them against movement relative to one another in the longitudinal direction of the slot (9),
**characterised in that** the distance (h) of the lap part (7) from the first part (1) is made greater than the wall thickness of the second part (2), so that a space is left between the lap part (7) and the second part (2) after welding.

2. A lap joint according to claim 1,
**characterised in that** the joint flap (5) is T-shaped and, when in the interlaced state on the two side lap parts (7), its distance (h) from one part (1) is greater than the wall thickness of the other part (2).

3. A lap joint according to claim 1 or claim 2,
**characterised in that** the positive connection (10) is at the side and near the lap joint.

4. A lap joint according to any of the preceding claims,
**characterised in that** the positive connection (10) is in the form of corrugations (10.1, 10.2) which extend at an angle to the longitudinal direction of the slot and positively engage in one another when the sheet-metal parts (1, 2) are fitted together.

## Revendications

1. Liaison par agrafage (3) entre deux pièces de tôle (1, 2), notamment entre deux pièces de carrosserie brute avant leur soudure, composée d'au moins une patte de jonction (5) issue en saillie de la première pièce de tôle (1) et qui peut être introduite puis ensuite agrafée par au moins une partie latérale d'agrafe (7) sur la deuxième pièce de tôle (2), et une liaison par complémentarité de formes (10) intervenant quand les pièces de tôle (1, 2) sont assemblées en bloquant le coulissement relatif de ces pièces selon la direction longitudinale de la fente d'accueil (9),
**caractérisée en ce que**
la distance (h) entre la partie d'agrafe (7) et la première pièce de tôle (1) est supérieure à l'épaisseur de la paroi de la seconde pièce de tôle (2), de sorte qu'après la soudure, il subsiste un intervalle entre la partie d'agrafe (7) et la seconde pièce de tôle (2).

2. Liaison par agrafage selon la revendication 1,
**caractérisée en ce que**
la patte de jonction (5) a la forme d'un T et présente à l'état agrafé, entre ses deux parties latérales d'agrafe (7) et la pièce de tôle (1), une distance (h) qui est supérieure à l'épaisseur de la paroi de l'autre pièce de tôle (2).

3. Liaison par agrafage selon la revendication 1 ou 2,
**caractérisée en ce que**
la liaison par complémentarité de formes (10) est disposée sur le côté de la liaison par agrafage.

4. Liaison par agrafage selon les revendications précédentes,
**caractérisée en ce que**
la liaison par complémentarité de formes (10) est constituée de sillons (10.1, 10.2) perpendiculaires à la direction longitudinale de la fente et qui viennent en prise avec verrouillage par complémentarité de formes quand les pièces de tôle (1, 2) sont assemblées.
